(19) Europäisches Patentamt / European Patent Office / Office européen des brevets

(11) **EP 3 045 479 B1**

(12) **EUROPEAN PATENT SPECIFICATION**

(45) Date of publication and mention of the grant of the patent:
**21.10.2020 Bulletin 2020/43**

(21) Application number: **14843623.1**

(22) Date of filing: **08.09.2014**

(51) Int Cl.:
*C08F 6/00* (2006.01)   *C08F 8/12* (2006.01)
*C08F 26/02* (2006.01)   *C08L 39/00* (2006.01)
*C08F 226/02* (2006.01)

(86) International application number:
**PCT/JP2014/073646**

(87) International publication number:
**WO 2015/037554 (19.03.2015 Gazette 2015/11)**

(54) **METHOD FOR PRODUCING POWDERED N-VINYLCARBOXAMIDE POLYMER COMPOSITION AND POLYVINYLAMINE AQUEOUS SOLUTION**

VERFAHREN ZUR HERSTELLUNG VON N-VINYLCARBOXAMIDPOLYMERZUSAMMENSETZUNG IN PULVERFORM UND WÄSSRIGE POLYVINYLAMINLÖSUNG

PROCÉDÉ DE PRODUCTION D'UNE COMPOSITION POLYMÈRE DE N-VINYLCARBOXAMIDE EN POUDRE ET D'UNE SOLUTION AQUEUSE DE POLYVINYLAMINE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **10.09.2013 JP 2013187060**

(43) Date of publication of application:
**20.07.2016 Bulletin 2016/29**

(73) Proprietor: **Mitsubishi Chemical Corporation Tokyo 100-8251 (JP)**

(72) Inventors:
• **ISHII, Akihiro**
  **Yokohama-shi**
  **Kanagawa 230-0053 (JP)**
• **MORI, Yasuharu**
  **Yokohama-shi**
  **Kanagawa 230-0053 (JP)**

(74) Representative: **Hoffmann Eitle**
**Patent- und Rechtsanwälte PartmbB**
**Arabellastraße 30**
**81925 München (DE)**

(56) References cited:
JP-A- H05 125 109   JP-A- H06 239 926
JP-A- H08 512 352   JP-A- 2001 253 905
JP-A- 2006 257 287   JP-A- 2010 059 220
JP-A- 2011 162 671   JP-B2- 3 296 508
US-A- 4 774 285

EP 3 045 479 B1

**Description**

Field of the Invention

The present invention relates to a method for producing a polyvinylamine solution. More specifically, the present invention relates to a production method of a high-molecular-weight polyvinylamine that is effective when used in the water treatment industry, especially when used as papermaking chemicals.

Background Art

Polyvinylamine obtained by hydrolyzing part of or the entire N-vinylcarboxamide polymer (hereinafter, a copolymer or a homopolymer containing a vinylamine unit produced by hydrolyzing part of or the entire copolymer or a homopolymer of N-vinylcarboxamide is referred to as polyvinylamine) is widely used in flocculants, papermaking chemicals, fiber treatment agents, coating additives and the like. Depending on usage purposes, polyvinylamine is used in a wide variety of applications, and its molecular weight ranges from a high- molecular weight of 4000000 or greater to a low-molecular weight of 100000 or less.

Polyvinylamine is a water-soluble polymer and is set ultimately to be in a solution form when used in the aforementioned chemicals.

Examples of a method for producing N-vinylcarboxamide polymers are solution polymerization as shown in Patent Publications 1 and 2, inverse suspension polymerization as shown in Patent Publication 3, and photo belt polymerization as shown in Patent Publication 4.

As for a polymerization initiator, a combination of redox initiator and azo initiator is used in Patent Publications 1 and 2, an azo initiator is used in Patent Publication 3, and a photoinitiator is used in Patent Publication 4. In Patent Publications 1 and 3, a polymerization process is conducted to obtain an N-vinylcarboxamide polymer, which is followed by direct hydrolysis, and powdered polyvinylamine is subsequently obtained. By contrast, in Patent Publication 4, the N-vinylformamide polymer is formed into a solution and is hydrolyzed to obtain a polyvinylamine solution.

Patent Publication 5 describes water-soluble copolymers containing copolymerized vinylamine units that are prepared by copolymerizing (a) from 95 to 10 mol % of N-vinylformamide and (b) from 5 to 90 mol % of an ethylenically unsaturated monomer from the group consisting of vinyl acetate, vinyl propionate, $C_1$-$C_4$-alkyl vinyl ethers, the esters, nitriles and amides of acrylic acid and methacrylic acid and N-vinylpyrrolidone, and then eliminating from 30 to 100 mol % of the formyl groups from the copolymer. The copolymers are used in papermaking to increase the dry strength and wet strength of the paper.

Patent Publication 6 describes an antistatic film that is obtained by coating at least one surface of a substrate film such as a polyester film with a coating liquid comprising a polyvinylamine composed of (A) 3-100 mol% vinylamine unit expressed by -(CH$_2$-CHNH$_2$)- and (B) 97-0 mol% nonionic monomer unit expressed by -(CH$_2$-CHNHCOR)- where R is methyl, having preferably 0.01-3 dl/g reduced viscosity and further preferably containing polyvinyl alcoholic resin, drawing the coated film and then heat-setting the drawn film at 170-250°C.

PRIOR ART PUBLICATION

PATENT PUBLICATION

Patent Publication 1: USP 6797785
Patent Publication 2: JP2010-59220A
Patent Publication 3: JP2011-162671A
Patent Publication 4: JP2004-75814A
Patent Publication 5: US 4,774,285A
Patent Publication 6: JP 3 296508B2

SUMMARY OF THE INVENTION

PROBLEMS TO BE SOLVED BY THE INVENTION

The ultimate usage form of polyvinylamine is usually a solution. However, when a polyvinylamine solution is stored for a long duration, a decrease in the viscosity of the solution may be observed.

Such a phenomenon occurs more often when the molecular weight of a polyvinylamine is higher or when the solution itself shows a lower viscosity, that is, when the solution is more diluted.

The aforementioned problem is solved by obtaining powdered polyvinylamine and dissolving it shortly before use. However, such a method requires each user to have equipment for dissolving powdered polyvinylamine.

In addition, if polyvinylamine is produced through different methods and the viscosity stability of each polyvinylamine solution is measured, it is found that the viscosity stability differs depending on the method employed to produce the polyvinylamine. Methods for polymerizing N-vinylcarboxamide are photopolymerization, suspension polymerization, adiabatic solution polymerization and the like, as described above. The viscosity stability of a polyvinylamine solution obtained through hydrolysis, the stability of powdered N-vinylcarboxamide, and the coloration degree during storage of the powder are observed to vary depending on the method, the polymerization concentration and the like.

SOLUTIONS TO THE PROBLEMS

The inventors of the present invention have studied the aforementioned problems extensively and have found the following: a factor having a significant impact on change in the viscosity is the azo initiator remaining in a final polyvinylamine solution; rather than on an N-vinylcarboxamide polymer, the residual azo initiator has a greater impact on a polyvinylamine solution obtained when part of or the entire polymer is hydrolyzed; and further greater impact is observed when the concentration of a polymer solution is higher and when the molecular weight of the polymer is heavier. As a result, the inventors have accomplished a production method capable of suppressing change in the viscosity of a polyvinylamine solution, and subsequently accomplished a polyvinyl amine solution produced by using such a method.

The present invention relates to a method for producing a polyvinylamine solution, comprising:

a step for polymerizing N-vinylcarboxamide by adding an azo initiator to a monomer composition containing N-vinylcarboxamide at a ratio of at least 0.05 parts by mass of the azo initiator relative to 100 parts by mass of the N-vinylcarboxamide monomer so as to obtain a polymerized composition containing an N-vinylcarboxamide polymer;

a step for reducing the amount of azo initiator remaining in the wet polymerized composition by treating the wet polymerized composition for an hour or longer at a temperature of at least 20°C higher than the 10-hour half-life temperature of the azo initiator; and a step for pulverizing the N-vinylcarboxamide polymer to make a powdered N-vinylcarboxamide polymer composition;

a step for preparing an N-vinylcarboxamide polymer solution by adding water to the powdered N-vinylcarboxamide polymer composition so that the solution contains the N-vinylcarboxamide polymer at 30 mass% or less relative to the entire mass of the N-vinylcarboxamide polymer solution; and

a step for hydrolyzing part of or the entire N-vinylcarboxamide polymer composition.

In one embodiment of the present invention the N-vinylcarboxamide polymer is an N-vinylformamide polymer.

In yet another embodiment of the present invention the 10-hour half-life temperature of the azo initiator is 110°C or lower.

In yet another embodiment of the present invention, the step for reducing the amount of azo initiator remaining in the polymerized composition is conducted by applying heat on the polymerized composition for an hour or longer at a temperature of at least 20°C higher than the 10-hour half-life temperature of the azo initiator so as to obtain a powdered N-vinylcarboxamide polymer composition, and the powdered N-vinylcarboxamide polymer composition after the thermal treatment contains at least 1 mass% of water relative to the entire mass of the powdered N-vinylcarboxamide polymer composition.

In another embodiment of the present invention, the method for producing a polyvinylamine solution further includes a step for storing the polyvinylamine solution for at least 24 hours after the step for hydrolyzing part of or the entire N-vinylcarboxamide polymer.

In yet another embodiment of the present invention the step for hydrolyzing part of or the entire N-vinylcarboxamide polymer is conducted by setting a condition of 50°C or higher.

In yet another embodiment of the present invention the viscosity of the produced polyvinylamine solution is 5 $\times$ 10$^5$ mPa·s or lower (25°C) as measured using a Brookfield viscometer under condition of 6 rpm and spindle No. 4.

In yet another embodiment of the present invention the powdered N-vinylcarboxamide polymer composition obtained after the step for reducing the amount of azo initiator remaining in the polymerized composition is set to have a moisture content of at least 1 mass% but no greater than 20 mass% relative to the entire mass of the powdered N-vinylcarboxamide polymer composition, and the powder is wrapped and stored for 24 hours or longer, and then water is added to the powder to form an N-vinylcarboxamide polymer solution for hydrolysis treatment.

In yet another embodiment of the present invention the amount of residual azo initiator in the polyvinylamine solution is 0.05 parts by mass or less relative to 100 parts by mass of polyvinylamine.

EFFECTS OF THE INVENTION

When a polyvinylamine solution is produced by hydrolyzing an N-vinylcarboxamide polymer according to the present invention, the viscosity of the solution will not be lowered even after the solution is stored for a long duration, and the storage stability is thus high. Moreover, the present invention is especially effective when it is a solution of a high-molecular-weight polyvinylamine. Since polyvinylamine is used as a solution, it is especially advantageous if its stability in a solution is enhanced. In addition, polyvinylamine solutions transported to customers and stored therein do not require any specific equipment for dissolving powdered polyvinylamine.

DETAILED DESCRIPTION OF THE EMBODIMENTS

Embodiments of the present invention are described below in detail.

[N-vinylcarboxamide Polymer]

N-vinylcarboxamide used as a main monomer in the present embodiment is shown in a general formula of $CH_2=CH-NHCOR$ (in the formula, "R" represents a hydrogen atom or an alkyl group having 1~6 carbon atoms.)

Specific examples of N-vinylcarboxamide in the present embodiment are N-vinylformamide (R=H), N-vinylacetoamide (R=CH$_3$), N-vinylpropionamide (R=C$_2$H$_5$), N-vinyl butyramide (R=C$_3$H$_7$), and the like. Among them, N-vinylformamide is preferred because polyvinylamine is easily derived from it.

If applicable, N-vinylcarboxamide of the present embodiment may be copolymerized with any monomer having unsaturated ethylenic bonding. Specific examples of copolymerizable monomers are (meth)acrylic acids and their salts; (meth)acrylates, (meth)acrylonitrile, (meth)acrylamides, N-alkyl(meth)acrylamides, N,N-dialkyl(meth)acrylamides, dialkylaminoethyl(meth)acrylamides, their salts or their quaternary products; dialkylaminopropyl(meth)acrylamides, and their salts or quaternary products; diacetone acrylamides, N-vinylpyrrolidones, N-vinylcaprolactam, vinylacetates, and the like.

The monomer composition used in the present embodiment mainly contains N-vinylcarboxamide and may contain another monomer. To carry out polymerization reactions, a monomer solution containing the above monomer composition dissolved in a solvent such as water is used. In addition, since heat is applied in a step for reducing the azo initiator remaining in the obtained polymer, it is preferred to increase the concentration of a monomer during polymerization reactions so that the solvent is less likely to boil when heated. More specifically, the concentration of the monomer composition is preferred to be at least 20 mass% of the entire mass of the monomer solution.

Regarding water as a solvent or water described in the embodiments below, pure water, purified water, deionized water or the like may be used as selected.

In the present embodiment, the amount of N-vinylcarboxamide in a monomer composition containing N-vinylcarboxamide may vary depending on the target polymer. Generally, N-vinylcarboxamide is a main monomer and its content is at least 50 mol%, preferably at least 70 mol%, more preferably 90~100 mol%, relative to 100 mol% of the entire monomer composition.

In the embodiments of the present invention, by adding a step for reducing the amount of azo initiator remaining in a polymerized composition containing the polymer, the stability of the obtained polyvinylamine is secured. Such an effect is described as follows: after N-vinylcarboxamide is polymerized, part of or the entire N-vinylcarboxamide polymer is hydrolyzed so that polyvinylamine is derived. Polyvinylamine is used as an additive or a flocculant for papermaking. Especially when used as a retention aid using its crosslinking flocculation-adsorption effects for papermaking or as a flocculant for water treatment, polyvinylamine with a higher molecular weight works better. However, when a solution of a high-molecular-weight polyvinylamine is stored, a decrease in viscosity is often observed. When the solution is measured through gel-filtration chromatography, a decrease in the average weight of the polymer is observed. In addition, its properties are also lowered due to a decrease in viscosity.

The aforementioned decrease in the molecular weight of a polymer is more remarkable when the initial molecular weight of the polymer is higher, when more moisture is contained, or when the concentration is lower. In addition, a decrease in the molecular weight of a polymer is greater in N-vinylcarboxamide polymers than in polyvinylamine polymers obtained through hydrolysis.

The stability of a polymer depends largely on conditions for producing N-vinylcarboxamide, more specifically, conditions for polymerization and subsequent treatments. In particular, if a radical generating initiator used for polymerization reactions remains even after hydrolysis treatment, the storage stability of polyvinylamine decreases noticeably.

Especially when an azo initiator with a relatively high decomposition temperature is used, such an azo initiator may remain until the final stage of the production method, and the stability of the obtained polymer is remarkably lowered.

However, if the amount of azo initiator used for polymerization reactions is reduced simply to prevent a decrease in the stability of a polymer, polymerization is not sufficiently carried out, and the amount of residual monomer after polymerization may increase. For that matter, the impact of an azo initiator is greater on a polyvinylamine obtained through hydrolysis than on an N-vinylcarboxamide polymer. Thus, it is sufficient if the azo initiator is removed after polymerization but before hydrolysis treatment.

Polymerization without using an azo initiator, for example, polymerization using a photoinitiator, does not use substances that may decrease stability. Thus, the stability of obtained polymers is less likely to be lowered. However, use of a photoinitiator requires specific equipment, and it is not a convenient polymerization method. Also, a redox initiator is less likely to remain after polymerization due to its lower decomposition temperature, but it may be hard to enhance polymerization conversion rates when only a redox initiator is used.

By contrast, azo initiators are preferred since they are easier to use and reduce the amount of residual monomer. However, it is necessary to use an excessive amount of azo initiator, which in turn results in aforementioned problems such as lowered stability of the obtained polymer. Therefore, it is effective if a somewhat excessive amount of azo initiator is used for polymerization, the azo initiator is decomposed and removed from the polymerized composition containing an N-vinylcarboxamide polymer after the polymerization is finished, and then hydrolysis treatment of the polymer is conducted. By so doing, polymerization conversion rates and the stability of polyvinylamine are both enhanced.

As a method for removing the azo initiator remaining in a polymerized composition, it is an option to purify the polymer through extraction or cleaning. In the present embodiment, the excess amount of azo initiator is decomposed by applying heat during a stable phase of N-vinylcarboxamide polymer so that the residual azo initiator is removed in a simple and effective way.

The N-vinylcarboxamide polymer related to the present invention may also be a copolymer as described above. The polymer includes a polymerized composition that contains moisture and substances derived from production materials such as the residual azo initiator.

In a step for producing an N-vinylcarboxamide polymer, the polymerization method is not limited specifically, and any generally employed method using an azo initiator may be used. Examples of polymerization methods are bulk polymerization, solution polymerization, adiabatic solution polymerization as a type of solution polymerization, suspension polymerization, emulsion polymerization and the like. In addition, batch, semi-batch or continuous polymerization may be employed.

In a step for producing an N-vinylcarboxamide polymer, an azo initiator used for polymerization may be water-soluble or oil-soluble. Examples of water-soluble azo initiators are 2,2'-azobis(amidinopropane)dihydrochloride, or 2,2'-azobis[2-(5-methyl-2-imidazolin-2-yl)propane]dihydrochloride, 4,4'-azobis(4-cyanovaleric acid), and the like.

Examples of oil-soluble azo initiators are 2,2'-azobisisobutyronitrile, 1,1'-azobis (cyclohexane carbonitrile), 2,2'-azobis(2-methylbutyronitrile), or 2,2'-azobis (2-methylpropionate), 2,2'-azobis(4-methoxy-2,4-dimethyl)valeronitrile, and the like. Also, it is especially preferred to use an azo initiator having a predetermined 10-hour half-life temperature or lower. Such temperature conditions are described later.

The amount of azo initiator for polymerization is 0.05~2 parts by mass, preferably 0.06~1 part by mass, relative to 100 parts by mass of an N-vinylcarboxamide monomer used for polymerization reactions. An excessively small amount of azo initiator may slow down the polymerization rate or increase the amount of residual monomer. The addition of too much of an azo initiator is not preferred since the molecular weight of the obtained polymer may be lowered, while removing the azo initiator remaining in the polymer solution may require a longer treatment time or higher temperatures.

A redox initiator may also be used together with an azo initiator for polymerization. Examples of redox initiators are ammonium peroxodisulfate in combination with sodium sulfite, sodium hydrogen sulfite, trimethylamine, tetramethylethylene diamine or the like; and t-butylhydroperoxide in combination with sodium sulfite or sodium hydrogen sulfite. Moreover, examples of peroxide are ammonium peroxodisulfate, potassium peroxodisulfate, hydrogen peroxide, benzoyl peroxide, lauroyl peroxide, octanoyl peroxide, succinic peroxide, t-butylperoxy-2-ethylhexanoate, and the like.

The most preferred example among them is to use t-butylhydroperoxide in combination with sodium sulfite, sodium hydrogen sulfite or ferric sulphate as a redox initiator, together with 2,2'-azobis(2-amidinopropane) as a water-soluble azo initiator. When a redox initiator is used, its ratio relative to 100 parts by mass of N-vinylcarboxamide monomer is preferred to be at least 0.001 parts by mass, preferably at least 0.003 parts by mass, but no greater than 0.1 parts by mass, preferably no greater than 0.06 parts by mass. In particular, the amount is selected appropriately, for example, to be at 0.001~0.1 parts by mass, preferably 0.003~0.06 parts by mass. In addition, two or more types of azo initiator may be used.

The temperature for initiating polymerization varies depending on the monomer concentration or the amount of an initiator. When no redox initiator is combined, the polymerization temperature is generally set at 30~70°C. When a redox initiator is combined, it is possible to initiate polymerization at 0°C or lower.

The polymerization conversion rate is preferred to be high. When the polymerized composition is heated subsequently, if the residual monomer amount is great, the monomer may decompose and result in coloration, or the polymer after hydrolysis treatment may become insoluble. Here, "become insoluble" means the amount of insoluble residue of the polymer is great as described in the examples below (refer to: Measuring Insoluble Residue of Polyvinylamine), and such an insoluble residue is hardly made into a solution. More specifically, when a polymer is "insoluble," the insoluble amount of residual polymer is usually 50 grams or more relative to 500 grams of a 1 mass% polyvinylamine solution. In addition, when a solution of a particulate polymer is formed, and when the polymer is only swollen but is not dissolved completely, the condition is also defined as being insoluble to water. Therefore, the conversion rate of a polymer is preferred to be at least 95 mol%, more preferably at least 98 mol%, even more preferably at least 99 mol%, relative to the entire molar amount of the monomer. To enhance the polymerization conversion rate, it is usually effective to increase the amount of azo initiator. According to the embodiments of the present invention, an excess amount of azo initiator is decomposed. In addition, known methods are available to prevent the obtained polymer from becoming insoluble. For example, an aldehyde component may be removed by using a reduction agent.

According to the aforementioned polymerization reactions, a polymerized composition containing an N-vinylcarboxamide polymer is obtained. When polymerization is carried out by aqueous polymerization, solution polymerization, inverse suspension polymerization or emulsion polymerization, the obtained polymerized composition is a hydrogel. When suspension or emulsion polymerization is employed, gel particles are dispersed in a hydrophobic solvent.

[Reducing Azo Initiator Remaining in Polymer]

After the above step for producing an N-vinylcarboxamide polymer (after polymerization or polymerization reactions), a step is conducted for reducing the azo initiator remaining in the polymerized composition containing an N-vinylcarboxamide polymer. The reduction step is conducted for an hour or longer on the wet polymer after polymerization at a temperature of at least 20°C higher than the 10-hour half-life temperature of the azo initiator. Such a treatment may be conducted by applying heat or by vacuum (reduced pressure) conditions. Considering productivity and equipment, applying heat is preferred.

As a step to reduce the amount of azo initiator in the present embodiment, heat is applied on the polymerized composition so as to decompose the azo initiator and to reduce the residual amount. The time and temperature for such treatment are to be an hour or longer at a temperature of at least 20°C higher than the 10-hour half-life temperature of the azo initiator, more preferably an hour or longer at a temperature of at least 25°C higher, even more preferably an hour or longer at a temperature of at least 30°C higher than the 10-hour half-life temperature.

When the polymerized composition is heated for an hour at a temperature of 20°C higher than the 10-hour half-life temperature of the azo initiator, the amount of residual azo initiator will be reduced to one half of the amount before the reduction step. If the polymerized composition is heated for an hour at a temperature of 30°C higher than the 10-hour half-life temperature of the azo initiator, the amount of residual azo initiator will be reduced to 1/10 of the amount prior to the reduction step. When the initial amount of azo initiator is 0.05 parts by mass, especially 0.06 parts by mass, relative to 100 parts by mass of the monomer, the effect achieved from the reduction step is observed to be especially remarkable for the final decomposition removal of the azo initiator.

It is preferred to use an azo initiator having a 10-hour half-life temperature of 110°C or lower. Accordingly, the heating temperature can be set at 130°C or lower. Moreover, if a 10-hour half-life temperature of an azo initiator is 0°C or lower, the heating temperature can be set at 100°C or lower and the process becomes more simplified. When a 10-hour half-life temperature exceeds 110°C, the required heating temperature is too high and may cause coloration or the like of the polymer. Also, when a 10-hour half-life temperature exceeds 110°C, decomposition is slow, the amount of radicals generated from the remaining initiator is small, and the decrease in storage stability is thereby low. Examples of azo initiators having a 10-hour half-life temperature of 110°C or lower are 2,2'-azobis(2-amidinopropane)dihydrochloride or the like among the examples listed above.

When multiple azo initiators are used, the heating temperature is set based on the highest 10-hour half-life temperature among them to remove the azo initiators remaining in the polymerized composition.

As described above, an N-vinylcarboxamide polymer contained in the polymerized composition prior to hydrolysis treatment is more stable than polyvinylamine. Furthermore, the polymer is more stable when it contains less moisture. Thus, for longer storage, an N-vinylcarboxamide polymer in a powdery state is made.

When a final polyvinylamine solution is formed, the amount of azo initiator remaining in a polymerized composition after the reduction process is preferred to be no greater than 0.05 mass%, more preferably no greater than 0.04 mass%, relative to the entire mass of an N-vinylcarboxamide polymer obtained in a step for producing the polymer. In the present embodiment, the mass of the N-vinylcarboxamide polymer is measured after heat is applied on the polymerized composition for adjusting its moisture content so as to obtain a powdered polymer (namely, the mass of powdered N-vinylcarboxamide polymer to undergo subsequent hydrolysis). Here, the mass of a polymer is defined as the mass that excludes the mass of moisture contained in the powder.

A step for applying heat may include a step for aging and moisture adjustment to be conducted after polymerization. Here, aging the polymer means further enhancement of a polymerization conversion rate. Moisture adjustment in the present embodiment mainly means adjusting the moisture content, that is, reducing the moisture content. As described later, the polymer is powdered so that it is easier to store the polymer and form a solution for hydrolysis. Especially, a step for achieving significant reduction of moisture may be referred to as a drying step. It is preferred to apply heat on the wet polymerized composition for an hour or longer so that the N-vinylcarboxamide polymer is aged. Too much moisture causes the entire volume to increase, and productivity thereby decreases. On the other hand, too little moisture causes a slow decomposition rate for the residual azo initiator. Relative to the entire mass of N-vinylcarboxamide polymer, the moisture content is preferred to be at least 1 mass%, more preferably at least 2 mass%, even more preferably at least 3 mass%, and is preferred to be no greater than 90 mass%, more preferably no greater than 80 mass%, even more preferably no greater than 75 mass%. In particular, for example, it is preferred to be at least 1 mass% but no greater than 90 mass%, more preferably at least 2 mass% but no greater than 80 mass% or less, even more preferably at least 3 mass% but no greater than 75 mass%.

To conduct a heating step on a polymerized composition, the heat generated during polymerization may be utilized effectively. In such a case, the reaction vessel is preferred to be insulated or to be heated from outside so as to minimize heat dissipation, and the shape is preferred to have a smaller surface area, namely, it is preferred to be a block shape rather than a thin sheet. Heat treatment is conducted under such conditions that the maximum temperature from polymerization heat reaches at least 20°C higher, preferably at least 30°C higher, than a 10-hour half-life temperature of the azo initiator, and that the temperature will be retained for an hour. In addition, it is preferred to conduct heat treatment so that the temperature of a gel at the end of the aging process is at least 20°C higher than the 10-hour half-life temperature. Here, the temperature of the gel means a temperature that represents the temperature of the majority of the gel. The temperature of a gel is measured by a known method, for example, by using a thermometer with an external sensor and by inserting the sensor into the gel. The upper limit of the temperature for heat treatment is the temperature at which the moisture in the gel would boil, and is determined appropriately based on the amount of the polymer contained in the gel. Considering the above conditions, heat treatment is preferred to be conducted at a temperature approximately 20~90°C higher, more preferably 30~90°C higher, than the 10-hour half-life temperature. In particular, heat treatment is preferred to be conducted at approximately 60~130°C, more preferably 60~100°C, so that the gel is prevented from boiling or that the change in properties of the gel is minimal.

Meanwhile, the gel may be pulverized first and heated from outside. In such a case, the gel needs to be pulverized finely so that it is easier to apply heat thereon.

The average particle diameter of a gel to be pulverized is 5 cm or less, preferably 2 cm or less, even more preferably 1 cm or less. To pulverize a gel, various known methods may be employed; for example, a gel may be cut by a cutter or may be extruded and cut by using a meat chopper. When a meat chopper is used, the hole diameter of a dice of the meat chopper is set at 5 cm or less, preferably 2 cm or less, even more preferably 1 cm or less.

To form a gel into fine particles, a meat chopper or the like is used by adjusting the hole diameter of the dice so as to obtain particles with a desired size. The particle diameter is usually approximately 1~7 mm.

When suspension polymerization or emulsion polymerization is employed, since the gel is in fine particles, a step for applying heat is conducted on the gel as is. When the gel is pulverized or made into fine particles, an aid may be used to suppress adhesion of particles to each other. Examples of aids are various oils such as polyalkylene glycols and silicone oils, and various surfactants. An aid may be coated on the surface of a soluble block gel before being pulverized, may be added to a pulverizing machine along with a soluble gel, or may be mixed in the pulverized particle gel.

For setting a polymerized composition to contain moisture, it is preferred to apply heat under conditions to minimize evaporation of moisture. To prevent moisture evaporation, a cover may be used, or an ambient humidity may be set high as a pre-step for the subsequent moisture adjustment process, so that decomposition of the residual azo initiator is accelerated.

When heating treatment is conducted to include a step for adjusting the moisture in a polymerized composition, it is preferred to be conducted for an hour or longer at a temperature of at least 20°C higher than the 10-hour half-life temperature so that the remaining moisture is 1 mass% or more relative to the entire mass of the polymerized composition at the end of the moisture adjustment process, namely, the entire mass of a gel. If the moisture content of a polymerized composition is too low, the decomposition of the residual azo initiator is remarkably slow, and the initiator will remain until the subsequent hydrolysis treatment. Thus, a polymerized composition is preferred to retain moisture.

When block polymerization is employed, a polymerized hydrogel composition is first pulverized into fine particles and then its moisture content is adjusted. The aforementioned methods for pulverizing the gel will apply here. A known method for drying is employed for moisture adjustment. If the moisture content is less than 1 mass% to the entire mass of the polymerized composition, the decomposition of the residual azo initiator slows. The azo initiator decomposes when the polymer is made into a solution for hydrolysis treatment and causes a decrease in the molecular weight of the polymer.

When the particles after moisture adjustment are powdered again, the particle size may be determined appropriately. When hydrolysis is conducted, if the particle diameter is too large, dissolution takes more time, and if the particle diameter is too small, lumping during dissolution or contamination may occur in the work environment. Thus, the particle diameter is usually set so that particles go through a 4-mesh screen but remain on a 500-mesh screen. The percentage of the particles that go through a 10-mesh screen but remain on a 100-mesh screen is preferred to be at least 80 mass%, more preferably at least 90 mass%, relative to the entire mass of particles.

In the present embodiment, a polymerized composition is made into powder by applying heat on a gelatinous polymerized composition to adjust its moisture content, and is made into fine particles as described above, or by forming fine particles as above and then by applying heat to adjust its moisture content, or by combining such procedures. A state of powder means that 80 mass% of the entire particles can go through a 4-mesh screen but remains on a 500-mesh screen. Through such procedures, a powdered N-vinylcarboxamide polymer composition is obtained.

The powdered N-vinylcarboxamide polymer composition after moisture adjustment is preferred to have a moisture content of at least 1 mass% but no greater than 20 mass% of the entire mass of the powered N-vinylcarboxamide polymer.

The powdered N-vinylcarboxamide polymer composition after moisture adjustment is relatively stable. Thus, if an N-vinylcarboxamide polymer is kept for a long duration without causing further reactions, namely, to store an N-vinylcarboxamide polymer, it is preferred to keep it as a powdered N-vinylcarboxamide polymer composition. When a polyvinylamine solution is stored, degradation is suppressed by conducting the process of the present embodiment, but a powdered N-vinylcarboxamide polymer composition is more stable. Thus, it is preferred to store a powdered N-vinylcarboxamide polymer composition, and then to carry out hydrolysis so that the duration for storing a polyvinylamine solution is shortened. When a powdered N-vinylcarboxamide polymer composition is stored for 24 hours or longer, it is preferred to wrap it up. "Wrapping" means to block direct sunlight or to prevent contact with outside factors. It is not necessary to be air tight or water sealed, but keeping the polymer composition in an air-tight condition can prolong its shelf life. The preferred storage duration is from one month to a few months. The storage conditions may be set at room temperature, but it is an option to store the polymer composition under high temperatures of 40~60°C for heat treatment of the polymer. For example, a polymer composition may be stored at around 15~60°C.

[Hydrolysis]

In the present embodiment, part of or the entire N-vinylcarboxamide polymer contained in a powdered N-vinylcarboxamide polymer composition is hydrolyzed to obtain a polyvinylamine solution. The present embodiment is especially effective when a polymer solution containing water and the polymer is hydrolyzed and the solution after hydrolysis is used as is for a polyvinylamine solution. Water is added again to the powdered N-vinylcarboxamide polymer composition so that the amount of N-vinylcarboxamide polymer is no greater than 30 mass% of the entire mass of the polymer solution. After that, hydrolysis is preferred to be conducted on the polymer solution. To sufficiently achieve the effect of the present embodiment, that is, to suppress the subsequent change in viscosity of the produced polyvinylamine solution, the viscosity of the polyvinylamine solution after hydrolysis is preferred to be $1 \times 10^6$ mPa·s or lower, more preferably $5 \times 10^5$ mPa·s or lower (25°C). The viscosity may be measured by any method capable of measuring the viscosity of a solution. In the present embodiment, a Brookfield viscometer is used. When the viscosity of a polyvinylamine solution is low, polymer chains are easy to move, and the polymer is more likely to bump into radicals generated when an azo initiator is decomposed. Accordingly, it is thought that the main chains tend to be cut. Therefore, the impact from the aforementioned problems may be minimized by conducting hydrolysis at a higher polymer concentration and by storing subsequently. However, under such conditions, it is hard to transport solutions through a pump and may require extra equipment. Thus, the effects of the present embodiment are especially significant when the solution is set at a low viscosity to make it easier to transport.

The conditions for hydrolysis may be acidic or alkaline. Considering the reaction rate, strong acid or strong alkali is preferred. When a solution is acidic, a monovalent acid is preferred, and hydrochloric acid is most preferred. Examples of alkali are LiOH, NaOH, KOH and the like. The hydrolysis rate of a formamide group in an N-vinylcarboxamide polymer, namely, when the formamide group of the polymer is converted to a vinylamine group, is preferred to be at least 10 mol% of the formamide group prior to hydrolysis (100 mol%). If a target hydrolysis rate is too low, it may be difficult to accurately adjust the hydrolysis rate. In addition, the hydrolysis rate is preferred to be no greater than 80 mol% of the formamide group prior to the hydrolysis process (100 mol%). If a target hydrolysis rate is too high, an excessive amount of strong acid or strong salt may be required.

By applying heat on the polymer solution during hydrolysis, the reaction rate may be enhanced. Depending on a target hydrolysis rate, when heat is applied at 50°C or higher, preferably 60°C or higher, the reaction time is shortened. However, if an azo initiator remains in the solution under high temperature conditions, decomposition of the azo initiator is also facilitated. Accordingly, a decrease in the molecular weight tends to occur during hydrolysis.

According to the present embodiment, a powdered N-vinylcarboxamide polymer is obtained, which is a precursor of polyvinylamine. The powdered N-vinylcarboxamide polymer is ultimately formed in a solution state, and is capable of producing a polyvinylamine solution whose viscosity is unlikely to be lowered during storage.

As described herein, a powdered N-vinylcarboxamide polymer composition, a production method of a polyvinylamine solution using the polymer composition, and a polyvinylamine solution obtained by using the production method are achieved, and they are used preferably in water treatment, wastewater treatment or the like. Especially, the production method and the solution are used for water treatment and wastewater treatment in the papermaking industry. Examples are papermaking agents or the like containing a polyvinylamine solution produced by using the production method of the present embodiment. In particular, a polyvinylamine solution produced by the production method related to the present invention is used for papermaking chemicals, flocculants, fiber treatment agents or the like. In addition, a polyvinylamine solution produced by the production method of the embodiment may also be used as the method for producing those papermaking chemicals.

EXAMPLES

The embodiments of the present invention are described in further detail by referring to the examples below.
The properties of a polymer in each of the examples and comparative examples are measured as follows.

(Measuring Viscosity of Solution)

The viscosity was measured by setting the temperature of a polymer solution at 25°C using a Brookfield viscometer under conditions of 6 rpm and spindle No. 4. The unit of viscosity is denoted as mPa·s (25°C).

(Measuring Reduced Viscosity)

A polymer sample was dissolved in 1N saline water to have a purity concentration of 0.1 g/dL, and its flow time was measured at 25°C using an Ostwald viscometer. In the same manner, the flow time of the 1N saline water was measured, and the reduced viscosity was obtained by formula (1) below.

$$\text{Reduced Viscosity:} \quad \eta_{sp}/C = (t - t_0)/t_0/0.1 \; [\text{d}1/\text{g}] \cdots (1)$$

t: flow time of sample solution (second)
$t_0$: flow time of 1N saline water (second)

(Evaluation of Solution Stability)

The obtained polyvinylamine solution was kept in an incubator set at 50°C. The solution was taken out after a predetermined time, and the viscosity was measured by the method described above. The measured viscosity was compared with the viscosity of the solution prior to being stored in the incubator.

(Measuring Moisture Content of Powdered N-vinylformamide Polymer Composition)

Into a weighing bottle, 0.5 grams of a powdered N-vinylformamide polymer composition was accurately weighed and added. Then, the bottle was placed into a dryer set at 110°C and removed from the dryer after 2.0 hours. The bottle was cooled in a desiccator for 30 minutes and was weighed. The reduced weight was obtained as the evaporated amount. The value obtained by dividing the reduced weight by the sample weight (0.5 grams) was set as the moisture content (shown by mass%).

(Measuring Insoluble Residue of Polyvinylamine)

Desalted water was added to a polyvinylamine solution obtained after hydrolysis to have a concentration of 1 mass%, and the entire solution was measured to be 500 grams. The solution was stirred for an hour at 280 rpm, and was filtered through a wire mesh with an opening of 180 $\mu$m. The insoluble residue on the wire mesh was cleaned with tap water. The amount of insoluble gel remaining on the mesh was measured.

(Measuring Azo Initiator Remaining in Polyvinylamine)

Two grams of a polyvinylamine solution was weighed in a 50 mL Erlenmeyer flask, into which 20 mL of an 80 vol% methanol solution was added and stirred for 5.5 hours. After the stirring was finished, 2.5 mL of the supernatant was divided into a 25 mL volumetric flask, and a mixed solution - 85 vol% of 0.1 M ammonium acetate/ 14 vol% of acetonitrile/ 1 vol% of acetic acid - was added to a marked line for dilution. The diluted solution was analyzed by liquid chromatography under the conditions below.

Analysis Conditions

Analysis System: LC analysis system made by Shimadzu Corporation
Column: ODP column (Shodex ODP 4.6 mm×250 mm)
Eluent: 85 vol% of 0.1 M ammonium acetate/ 14 vol% of acetonitrile/ 1 vol% of acetic acid
Flow Rate: 0.5 mL/min
Analysis Temperature: 40°C
Amount of Sample Injected: 400 μL
Detector: UV detector (wavelength: 370 nm)

(Polymer Preparation A: Adiabatic Polymerization)

Relative to 70 parts by mass of deionized water, 0.3 parts by mass of polyethylene glycol (average molecular weight of 20000) was dissolved, and 30 parts by mass of N-vinylformamide (99 mass% purity) was mixed in. Then, phosphoric acid was added to adjust the pH of the monomer solution to be at 6.3. Accordingly, a monomer liquid was obtained.
The monomer liquid was cooled to 0°C, the cooled liquid was transferred to an adiabatic reaction vessel equipped with a thermometer, and nitrogen aeration was conducted for 15 minutes. Then, 0.15 mass% (relative to the monomer) of 2,2'-azobis(2-amidinopropane)dihydrochloride (brand name V-50, made by Wako Pure Chemical Industries, Ltd.: 10-hour half-life temperature of 56°C) and 0.024 mass% (relative to the monomer) of t-butylhydroperoxide (brand name: Perbutyl H-69, made by NOF) were made into a 10 mass% solution, which was added to the monomer liquid. Then, 0.035 mass% (relative to the monomer) of sodium bisulfite made into a 10 mass% solution was further added to initiate polymerization.
The temperature of the system reached 92°C 130 minutes after polymerization had begun. The liquid was further kept in the reaction vessel for 60 minutes (the center temperature of the polymerized gel was 90°C after 60 minutes). Then, the produced polymer (polymerized composition) was removed from the reaction vessel and crushed by using a meat chopper. Its moisture content was adjusted in a 110°C ventilation dryer for 1.5 hours, pulverized to make powder (powdered N-vinylformamide polymer composition). The powder contained 5 mass% of moisture. The reduced viscosity of the polymer was 6.2 dL/g.

(Polymer Preparation B: Adiabatic Polymerization)

A monomer liquid was prepared the same as in Polymer Preparation A except that 80 parts by mass of deionized water and 20 parts by mass of N-vinylformamide (99 mass% purity) were used. After the monomer liquid was cooled and nitrogen aeration was conducted, 0.15 mass% (relative to the monomer) of 2,2'-azobis(2-amidinopropane)dihydrochloride (brand name V-50, made by Wako Pure Chemical: 10-hour half-life temperature of 56°C) and 0.02 mass% (relative to the monomer) of t-butylhydroperoxide (brand name: Perbutyl H-69, made by NOF) were made into a 10 mass% solution, which was added to the monomer liquid. Then, 0.02 mass% (relative to the monomer) of sodium bisulfite made into a 10 mass% solution was further added to initiate polymerization.
The temperature of the system reached 60°C 130 minutes after the start of polymerization. The liquid was further kept in the reaction vessel for 60 minutes (the center temperature of the polymerized gel was 58°C after 60 minutes). Then, the produced polymer was removed from the reaction vessel, and was pulverized by using a meat chopper. Its moisture content was adjusted in a 60°C ventilation dryer for 24 hours and pulverized to make a powered polymer. The powdered polymer contained 5 mass% of moisture relative to the entire mass. The reduced viscosity of the polymer was 5.8 dL/g.

(Polymer Preparation C: Suspension Polymerization)

Into a reaction vessel equipped with a stirrer, dropping funnel and a jacket, 400 mL of cyclohexane and 9.4 grams of an emulsifier: polyoxyethylene alkyl ether (HLB14) were added. While nitrogen was mixed in and the content was stirred by adding humidity at 55°C, 80 grams of N-vinylformamide (99 mass% purity), 45 grams of deionized water, 30 mg of sodium hypophosphite, and 0.40 mass% of 2,2'-azobis(2-amidinopropane)dihydrochloride (brand name V-50, made by Wako Pure Chemical: 10-hour half-life temperature of 56°C) were put in the dropping funnel and the entire content was dropped in 3 hours. The mixture was kept at 56°C for 2 hours, and heated at 70~77°C for 30 minutes to condense the evaporated moisture and cyclohexane. Then, the mixture was dehydrated by refluxing only cyclohexane to obtain a powdered N-vinylformamide polymer. The moisture content was 1 mass% relative to the entire mass of the powdered polymer. The reduced viscosity of the polymer was 5.0 dL/g.

(Hydrolysis Rate of N-vinylformamide Polymer)

Polyvinylamine obtained by hydrolyzing an N-vinylformamide polymer was dissolved in desalted water to have a polyvinylamine concentration of 0.025 mass%. Using toluidine blue as an indicator at pH=2.5, the polymer was titrated in a 1/400 N polyvinyl potassium sulfate solution. The cation equivalent of polyvinylamine was calculated from the titrated amount, and the hydrolysis rate of the N-vinylformamide polymer was obtained by the following formula.

$$\text{Hydrolysis Rate (mol\%)}= \text{cation equivalent}\times100 \; / \; ((1000-(\text{cation equivalent}\times79.5)) \; / \; 71 + \text{cation equivalent})$$

(Example 1)

Into a solution formed by adding 7 grams of 48 mass% NaOH and 0.6 grams of sodium dithionate into 123 grams of water, 15 grams of a powdered N-vinylformamide polymer obtained in Polymer Preparation A was added little by little and dissolved at 50°C for 2 hours. Then, hydrolysis was carried out at 80°C for 3 hours. After hydrolysis, a polyvinylamine solution with a hydrolysis rate of 41 mol% was obtained (concentration of polyvinylamine: 10 mass% relative to the entire mass of the solution). The viscosity was $9.5 \times 10^4$ mPa·s (25°C). The amount of residual azo initiator was 0.015 parts by mass relative to 100 parts by mass of polyvinylamine. The polyvinylamine solution was diluted to 500 grams of a 1 mass% solution. When the insoluble residue of the gel was measured, the residual amount on the sieve was 0 grams.
The 10 mass% polyvinylamine solution was stored at an ambient temperature of 50°C for 30 days. The viscosity was measured at $8.7 \times 10^4$ mPa·s (25°C), and the decrease in viscosity was within 10%.

(Comparative Example 1)

The same as in Example 1, a powdered N-vinylformamide polymer obtained in Polymer Preparation B was hydrolyzed, and a solution of polyvinylamine converted at a hydrolysis rate of 42 mol% was obtained (concentration: 10 mass% relative to the entire mass of the solution). The viscosity was $7.2 \times 10^4$ Pa·s (25°C). The polyvinylamine solution was diluted to 500 grams of a 1 mass% solution. When the insoluble residue of the gel was measured, the residual amount on the sieve was 0 grams.
The 10 mass% polyvinylamine solution was stored at an ambient temperature of 50°C for 30 days. When the viscosity was measured, it was at $2.5 \times 10^4$ mPa·s (25°C), and the decrease in viscosity was 65%. The amount of residual azo initiator was 0.1 parts by mass relative to 100 parts by mass of polyvinylamine.

(Comparative Example 2)

The same as in Example 1, a powdered N-vinylformamide polymer obtained in polymer preparation C was hydrolyzed (hydrolysis rate of 40 mol%), and a polyvinylamine solution was obtained (concentration: 10 mass% relative to the entire mass of the polyvinylamine solution). The viscosity was $1.5 \times 10^4$ mPa·s (25°C). The polyvinylamine solution was diluted to 500 grams of a 1 mass% solution. When the insoluble residue of the gel was measured, the residual amount on the sieve was 0 grams.
The solution was stored at an ambient temperature of 50°C for 30 days. When the viscosity was measured, it was at $30\times10^3$ mPa·s (25°C), and the decrease in viscosity was 80%. The amount of residual azo initiator was 0.1 parts by mass relative to 100 parts by mass of polyvinylamine.

(Example 2)

The powder obtained in Polymer Preparation B was spread thinly on a batt, desalted water was scattered to impregnate the powder to form gel particles containing 30 mass% of the polymer and 70 mass% of moisture. At that time, no liquidity was observed. To avoid evaporation of moisture, the gel was covered with a thin PET film and heated by blowing 95°C air for an hour.
Then, the gel was hydrolyzed the same as in Example 1 (considering the moisture in the gel, the concentration of the NaOH solution was increased). Accordingly, a polyvinylamine solution with a hydrolysis rate of 42 mol% was obtained. The viscosity was $7.2\times10^4$ mPa·s (25°C). The polyvinylamine solution was diluted to 500 grams of a 1 mass% solution. When the insoluble residue of the gel was measured, the residual amount on the sieve was 0 grams.
The 10 mass% polyvinylamine solution was stored at an ambient temperature of 50°C for 30 days. When the viscosity was measured, it was at $6.6\times10^4$ mPa·s (25°C), and the decrease in viscosity was within 10%. The amount of residual azo initiator was 0.013 parts by mass relative to 100 parts by mass of polyvinylamine.

(Comparative Example 3)

The same as in Example 2, heat was applied at 70°C for an hour. Also, a polyvinylamine solution was prepared (hydrolysis rate of 42 mol%). The viscosity was $7.6 \times 10^4$ mPa·s (25°C). The polyvinylamine solution was diluted to 500 grams of a 1 mass% solution. When the insoluble residue of the gel was measured, the residual amount on the sieve was 0 grams.

The 10 mass% polyvinylamine solution was stored at an ambient temperature of 50°C for 30 days. When the viscosity was measured, it was at $4.0 \times 10^4$ mPa·s (25°C), and the decrease in viscosity was 47%.

(Example 3)

The same as in Polymer Preparation C, polymerization was carried out, and a gel was separated without conducting a dehydration process. Cyclohexane adhered to the surface was removed by circulating nitrogen, and the gel was spread thinly on a batt, covered by a PET film, and heated at 90°C the same as in Example 2.

Then, the gel was hydrolyzed the same as in Example 1 (considering the moisture in the gel, the concentration of the NaOH solution was increased). Accordingly, a polyvinylamine solution with a hydrolysis rate of 42 mol% was obtained. When the viscosity was measured, it was at $1.7 \times 10^4$ Pa·s (25°C).

The solution was stored at 50°C for 30 days. When the viscosity was measured, it was at $1.6 \times 10^4$ mPa·s (25°C), and the decrease in viscosity was within 10%.

(Example 4)

A polymer obtained in Polymer Preparation A was stored at 50°C for 100 days, and a 10 mass% polyvinylamine solution was prepared the same as in Example 1. When the viscosity was measured, it was at $8.6 \times 10^4$ mPa·s (25°C), and no degradation was observed in the N-vinylformamide polymer. Furthermore, after the solution was stored at 50°C for 30 days, the viscosity was $8.2 \times 10^4$ mPa·s (25°C), and no degradation was observed. The polymer powder before being dissolved was light yellow. Meanwhile, after the solution in Example 1 was stored at 50°C for 30 days, the viscosity was $7.2 \times 10^4$ mPa·s (25°C). Accordingly, it was found that the degradation speed was slower than that in Comparative Examples, and that storing as a powder was effective to maintain the viscosity level.

(Comparative Example 4)

The same procedure as in Polymer Preparation A was employed except that the amount of 2,2'-azobis(2-amidinopropane)dihydrochloride (brand name V-50, made by Wako Pure Chemical: 10-hour half-life temperature of 56°C) was changed to 0.03 mass% (relative to the monomer). Then, the gel was hydrolyzed the same as in Example 1, the powder was not dissolved completely, and the solution contained swollen gel. The polyvinylamine solution was diluted to 500 grams of a 1 mass% solution. When the insoluble residue of the gel was measured, the residual amount on the sieve was 100 grams. It was thought that a reduction in the amount of azo initiator added for polymerization caused a greater amount of residual monomer, which in turn caused insoluble residues during hydrolysis.

(Comparative Example 5)

Polymerization was carried out the same as in Polymer Preparation B except that the amount of 2,2'-azobis(2-amidinopropane)dihydrochloride (brand name V-50, made by Wako Pure Chemical: 10-hour half-life temperature of 56°C) was changed to 0.075 mass% (relative to the monomer), the amount of t-butylhydroperoxide (brand name: Perbutyl H-69, made by NOF) was changed to 0.01 mass% (relative to the monomer), and the amount of sodium bisulfite was changed to 0.015 mass% (relative to the monomer). Then, the obtained gel after polymerization was hydrolyzed the same as in Example 1, it was found that the viscosity was high and the solution was wrapped around a stirrer. When the viscosity was measured, it was at $1.21 \times 10^6$ mPa·s (25°C). The polyvinylamine solution was diluted to 500 grams of a 1 mass% solution. When the insoluble residue of the gel was measured, the residual amount on the sieve was 0 grams.

The 10 mass% polyvinylamine solution was stored at 50°C for 30 days. When the viscosity was measured, it was at $1.1 \times 10^6$ mPa·s (25°C). The decrease in viscosity was within 10%. The amount of azo initiator was 0.05 mass% relative to the mass of polyvinylamine.

Even if too much azo initiator remains in a solution, if the solution viscosity is high, the viscosity will not decrease because the substances in the solution are kept from moving. However, a solution with high viscosity is hard to handle. Thus, such a solution is not suitable for practical use.

(Reference Example 1)

To the hydrogel obtained by Polymer Preparation A and then pulverized, 2,2'-azobis(2-amidinopropane)dihydrochloride (brand name V-50, made by Wako Pure Chemical: 10-hour half-life temperature of 56°C) was added at 0.010 mass% relative to the mass of the polymer, and its moisture content was adjusted at 60°C for 24 hours by blowing air. Accordingly, a powdered N-vinylcarboxamide polymer containing the azo initiator was obtained. The moisture content was 5 mass% of the entire mass of the polymer. When the powdered polymer was stored under the same conditions as in Example 4, the color of the powdered polymer turned dark pink or brown. Then, after the powdered polymer was further stored at 50°C for 100 days the same as in Example 1, a 10 mass% polyvinylamine solution was prepared. When the viscosity was measured, it was $8.5 \times 10^4$ mPa·s (25°C), which was an approximate 10% degradation. Moreover, when the viscosity was measured after the solution had been stored at 50°C for 30 days, it had degraded to $8.0 \times 10^3$ mPa·s (25°C).

INDUSTRIAL APPLICABILITY

The production methods of polyvinylamine solutions according to the embodiments of the present invention are used in a wide variety of applications, for example, as papermaking chemicals in the papermaking industry, as flocculants or fiber treatment agents in the water or waste-water treatment industry, and the like.

**Claims**

1.  A method for producing a polyvinylamine solution, comprising:

    a step for polymerizing N-vinylcarboxamide by adding an azo initiator to a monomer composition containing N-vinylcarboxamide at a ratio of at least 0.05 parts by mass of the azo initiator relative to 100 parts by mass of the N-vinylcarboxamide monomer so as to obtain a polymerized composition containing an N-vinylcarboxamide polymer;
    a step for reducing the amount of azo initiator remaining in the wet polymerized composition by treating the wet polymerized composition for an hour or longer at a temperature of at least 20°C higher than the 10-hour half-life temperature of the azo initiator; and a step for pulverizing the N-vinylcarboxamide polymer to make a powdered N-vinylcarboxamide polymer composition;
    a step for preparing an N-vinylcarboxamide polymer solution by adding water to the powdered N-vinylcarboxamide polymer composition so that the solution contains the N-vinylcarboxamide polymer at 30 mass% or less relative to the entire mass of the N-vinylcarboxamide polymer solution; and
    a step for hydrolyzing part of or the entire N-vinylcarboxamide polymer composition.

2.  The method according to Claim 1, wherein the N-vinylcarboxamide polymer is an N-vinylformamide polymer.

3.  The method according to Claim 1, wherein the 10-hour half-life temperature of the azo initiator is 110°C or lower.

4.  The method according to Claim 1, wherein the step for reducing the amount of azo initiator remaining in the polymerized composition is conducted by applying heat on the polymerized composition for an hour or longer at a temperature of at least 20°C higher than the 10-hour half-life temperature of the azo initiator so as to obtain the powdered N-vinylcarboxamide polymer composition, and the powdered N-vinylcarboxamide polymer composition after the thermal treatment contains at least 1 mass% of water relative to the entire mass of the powdered N-vinylcarboxamide polymer composition.

5.  The method according to Claim 1, further comprising a step for storing the polyvinylamine solution for at least 24 hours after the step for hydrolyzing part of or the entire N-vinylcarboxamide polymer.

6.  The method according to Claim 1, wherein the step for hydrolyzing part of or the entire N-vinylcarboxamide polymer is conducted by setting a condition of 50°C or higher.

7.  The method according to Claim 1, wherein the viscosity of the polyvinylamine solution as measured using a Brookfield viscometer under condition of 6 rpm and spindle No. 4 is $5 \times 10^5$ mPa·s or lower (25°C).

8.  The method according to Claim 1, wherein the powdered N-vinylcarboxamide polymer composition is set to have a moisture content of at least 1 mass% but no greater than 20 mass% relative to the entire mass of the powdered N-vinylcarboxamide polymer composition, the powder is wrapped and stored for 24 hours or longer, and then water is added to the powder to form an N-vinylcarboxamide polymer solution for hydrolysis treatment.

9. The method according to Claim 1, wherein the amount of azo initiator remaining in the polyvinylamine solution as analyzed by liquid chromatography is 0.05 parts by mass or less relative to 100 parts by mass of polyvinylamine.

**Patentansprüche**

1. Verfahren zur Herstellung einer Polyvinylaminlösung, umfassend:

   einen Schritt zum Polymerisieren von N-Vinylcarboxamid durch Hinzufügen eines Azo-Initiators zu einer Monomerzusammensetzung, die N-Vinylcarboxamid enthält, bei einem Verhältnis von mindestens 0,05 Masseteilen des Azo-Initiators relativ zu 100 Masseteilen des N-Vinylcarboxamid-Monomers, so dass eine polymerisierte Zusammensetzung erhalten wird, die ein N-Vinylcarboxamid-Polymer enthält,
   einen Schritt zum Reduzieren der Menge des Azo-Initiators, der in der feuchten polymerisierten Zusammensetzung zurückbleibt, durch Behandeln der feuchten polymerisierten Zusammensetzung für eine Stunde oder länger bei einer Temperatur von mindestens 20°C höher als die 10-stündige Halbwertstemperatur des Azo-Initiators und einen Schritt zum Pulverisieren des N-Vinylcarboxamid-Polymers, um eine pulverförmige N-Vinylcarboxamid-Polymerzusammensetzung herzustellen,
   einen Schritt zur Herstellung einer N-Vinylcarboxamid-Polymerlösung durch Hinzufügen von Wasser zu der pulverförmigen N-Vinylcarboxamid-Polymerzusammensetzung, so dass die Lösung das N-Vinylcarboxamid-Polymer zu 30 Masse-% oder weniger relativ zu der Gesamtmasse der N-Vinylcarboxamid-Polymerlösung enthält, und
   einen Schritt zum Hydrolysieren eines Teils der oder der gesamten N-Vinylcarboxamid-Polymerzusammensetzung.

2. Verfahren gemäß Anspruch 1, wobei das N-Vinylcarboxamid-Polymer ein N-Vinylformamid-Polymer ist.

3. Verfahren gemäß Anspruch 1, wobei die 10-stündige Halbwertstemperatur des Azo-Initiators 110°C oder niedriger ist.

4. Verfahren gemäß Anspruch 1, wobei der Schritt zum Reduzieren der Menge des Azo-Initiators, der in der polymerisierten Zusammensetzung zurückbleibt, durch Anwendung von Wärme auf die polymerisierte Zusammensetzung für eine Stunde oder länger bei einer Temperatur von mindestens 20°C höher als die 10-stündige Halbwertstemperatur des Azo-Initiators durchgeführt wird, so dass die pulverförmige N-Vinylcarboxamid-Polymerzusammensetzung erhalten wird und die pulverförmige N-Vinylcarboxamid-Polymerzusammensetzung nach der Wärmebehandlung mindestens 1 Masse-% Wasser relativ zu der gesamten Masse der pulverförmigen N-Vinylcarboxamid-Polymerzusammensetzung enthält.

5. Verfahren gemäß Anspruch 1, ferner umfassend einen Schritt zur Lagerung der Polyvinylaminlösung für mindestens 24 Stunden nach dem Schritt zum Hydrolysieren eines Teils des oder des gesamten N-Vinylcarboxamid-Polymers.

6. Verfahren gemäß Anspruch 1, wobei der Schritt zum Hydrolysieren eines Teils des oder des gesamten N-Vinylcarboxamid-Polymers durch Einstellen einer Bedingung von 50°C oder höher durchgeführt wird.

7. Verfahren gemäß Anspruch 1, wobei die Viskosität der Polyvinylaminlösung, gemessen unter Verwendung eines Brookfield-Viskosimeters unter der Bedingung von 6 U/min und einer Spindel-Nr. 4, $5 \times 10^5$ mPa·s oder weniger (25°C) beträgt.

8. Verfahren gemäß Anspruch 1, wobei die pulverförmige N-Vinylcarboxamid-Polymerzusammensetzung so eingestellt wird, dass sie einen Feuchtigkeitsgehalt von mindestens 1 Masse-% jedoch nicht größer als 20 Masse-% relativ zu der gesamten Masse der pulverförmigen N-Vinylcarboxamid-Polymerzusammensetzung aufweist, das Pulver eingehüllt und für 24 Stunden oder länger gelagert wird und dann Wasser zu dem Pulver hinzugefügt wird, um eine N-Vinylcarboxamid-Polymerlösung zur Hydrolysebehandlung zu bilden.

9. Verfahren gemäß Anspruch 1, wobei die Menge des Azo-Initiators, der in der Polyvinylaminlösung zurückbleibt, analysiert durch Flüssigchromatographie, 0,05 Masseteile oder weniger relativ zu 100 Masseteilen des Polyvinylamins beträgt.

**Revendications**

1. Procédé de production d'une solution de polyvinylamine, comprenant :

    une étape de polymérisation de N-vinylcarboxamide par ajout d'un initiateur azoïque à une composition monomère contenant du N-vinylcarboxamide en un rapport d'au moins 0,05 partie en masse de l'initiateur azoïque par rapport à 100 parties en masse du monomère de N-vinylcarboxamide pour obtenir une composition polymérisée contenant un polymère de N-vinylcarboxamide ;
    une étape de réduction de la quantité d'initiateur azoïque restant dans la composition polymérisée mouillée par traitement de la composition polymérisée mouillée pendant une heure ou plus à une température d'au moins 20 °C supérieure à la température de demi-vie à 10 heures de l'initiateur azoïque ; et une étape de pulvérisation du polymère de N-vinylcarboxamide pour faire une composition pulvérulente de polymère de N-vinylcarboxamide ;
    une étape de préparation d'une solution de polymère de N-vinylcarboxamide par ajout d'eau à la composition pulvérulente de polymère de N-vinylcarboxamide de manière à ce que la solution contienne le polymère de N-vinylcarboxamide à 30% en masse ou moins par rapport à la totalité de la masse de la solution de polymère de N-vinylcarboxamide ; et
    une étape d'hydrolyse d'une partie ou de la totalité de la composition de polymère de N-vinylcarboxamide.

2. Procédé selon la revendication 1, dans lequel le polymère de N-vinylcarboxamide est un polymère de N-vinylformamide.

3. Procédé selon la revendication 1, dans lequel la température de demi-vie à 10 heures de l'initiateur azoïque est de 110 °C ou moins.

4. Procédé selon la revendication 1, dans lequel l'étape de réduction de la quantité d'initiateur azoïque restant dans la composition polymérisée est réalisée par application de chaleur sur la composition polymérisée pendant une heure ou plus à une température supérieure d'au moins 20 °C à la température de demi-vie à 10 heures de l'initiateur azoïque pour obtenir la composition pulvérulente de polymère de N-vinylcarboxamide, et la composition pulvérulente de polymère de N-vinylcarboxamide après le traitement thermique contient au moins 1% en masse d'eau par rapport à la totalité de la masse de la composition pulvérulente de polymère de N-vinylcarboxamide.

5. Procédé selon la revendication 1, comprenant en outre une étape de stockage de la solution de polyvinylamine pendant au moins 24 heures après l'étape d'hydrolyse d'une partie ou de la totalité du polymère de N-vinylcarboxamide.

6. Procédé selon la revendication 1, dans lequel l'étape d'hydrolyse d'une partie ou de la totalité du polymère de N-vinylcarboxamide est réalisée par définition d'une condition de 50 °C ou plus.

7. Procédé selon la revendication 1, dans lequel la viscosité de la solution de polyvinylamine telle que mesurée en utilisant un viscosimètre Brookfield dans une condition de 6 tr/min et d'une broche N° 4 est de 5 x $10^5$ mPa·s ou moins (25 °C).

8. Procédé selon la revendication 1, dans lequel la composition pulvérulente de polymère de N-vinylcarboxamide est définie pour avoir une teneur en eau d'au moins 1 % en masse, mais pas supérieure à 20 % en masse par rapport à la totalité de la masse de la composition pulvérulente de polymère de N-vinylcarboxamide, la poudre est enveloppée et stockée pendant 24 heures ou plus, puis de l'eau est ajoutée à la poudre pour former une solution polymère de N-vinylcarboxamide pour le traitement par hydrolyse.

9. Procédé selon la revendication 1, dans lequel la quantité d'initiateur azoïque restant dans la solution de polyvinylamine telle qu'analysée par chromatographie en phase liquide est de 0,05 partie en masse ou moins par rapport à 100 parties en masse de polyvinylamine.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6797785 B
- JP 2010059220 A
- JP 2011162671 A
- JP 2004075814 A
- US 4774285 A
- JP 3296508 B